# EUROPÄISCHE PATENTANMELDUNG

(11) **EP 1 369 319 A2**
(43) Veröffentlichungstag der Anmeldung: **10.12.2003**
(21) Anmeldenummer: 03101418.6
(22) Anmeldetag: 20.05.2003
(51) Int. Cl.: B60R 22/34, H02K 7/116

(54) **Stellmotor für Kraftfahrzeug -Funktionsteile mit einem eine Selbsthemmung aufweisenden Getriebe**

(30) Priorität: 29.05.2002 DE 10224353
(71) Anmelder: SIEMENS AKTIENGESELLSCHAFT, 80333 München (DE)
(72) Erfinder: Viernekes, Gerald, 97437, Hassfurt (DE)

(57) **Zusammenfassung**

Die Erfindung bezieht sich auf einen Stellantrieb für bewegliche Funktionsteile in Kraftfahrzeugen wie Fenster, Tür, Schiebedach, Sitzverstellung, elektrische Parkbremse oder dergleichen, mit einem Antriebsmotor und einem nachgeschalteten, an das bewegliche Funktionsteil gekoppelten Getriebe, wobei das Getriebe als mit der Außenverzahnung eines das bewegliche Funktionsteil antreibenden Antriebsritzels kämmende Schneckenverzahnung ausgebildet ist, wobei in der durch eine auf das bewegliche Funktionsteil einwirkenden Last bewirkten und entgegen der Antriebsdrehrichtung gerichteten Drehrichtung (Pfeil 40) der Schneckenverzahnung (19) eine Hemmung der Schneckendrehung zur Aufnahme des von dem beweglichen Funktionsteil ausgeübten Drehmoments eingerichtet ist.

## Beschreibung

Die Erfindung betrifft einen Stellantrieb für bewegliche Funktionsteile in Kraftfahrzeugen wie Fenster, Tür, Schiebedach, Sitzverstellung, elektrische Parkbremse oder dergleichen, mit einem Antriebsmotor und einem nachgeschalteten, an das bewegliche Funktionsteil gekoppelten Getriebe, wobei das Getriebe als mit der Außenverzahnung eines das bewegliche Funktionsteil antreibenden Antriebsritzels kämmende Schneckenverzahnung ausgebildet ist.

Ein Stellantrieb mit den vorgenannten Merkmalen ist in einer Anwendung als Antrieb für einen Fensterheber als bewegliches Funktionsteil in einem Kraftfahrzeug aus der DE 27 29 398 A1 bekannt. Die Motorwelle des als Gleichstrommotor ausgebildeten Antriebsmotors trägt ein Schneckenrad, welches seinerseits ein weiteres Antriebsritzel als Teil der Antriebswelle für den Fensterheber antreibt. Soweit es bei einer derartigen Anwendung wünschenswert ist, der Öffnung des Fensters ohne Zuschaltung des Antriebsmotors, also durch einfaches Niederdrücken des Fensters, einen möglichst großen Widerstand entgegenzusetzen, besteht eine praktizierte Lösung darin, den Wirkungsgrad des eingesetzten Getriebes so niedrig auszulegen, daß es einer erheblichen Kraft oberhalb einer festgelegten Schwelle bedarf, um das Fenster entgegen dem bei stehendem Antriebsmotor vom Getriebe ausgehenden Widerstand in die Öffnungsstellung zu verbringen. Ein aus Sicherheitsgründen eingerichteter oder aber auch bei anderen Anwendungen wie Schiebe-Hebe-Dächern als Funktionsteilen systembedingter schlechter Getriebewirkungsgrad bringt jedoch zwangsläufig den Nachteil mit sich, dass der Antriebsmotor entsprechend groß ausgelegt sein muss, um die reguläre Bewegung des betreffenden Funktionsteiles durchzuführen.

Der Erfindung liegt daher die Aufgabe zugrunde, einen Stellantrieb mit den eingangs genannten Merkmalen derart auszulegen, dass einerseits während des Betriebs des Antriebsmotors zur Bewegung des Funktionsteiles ein guter Getriebewirkungsgrad sichergestellt, andererseits jedoch bei stillstehendem Antriebsmotor eine Selbsthemmung des Getriebes verwirklicht ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass in der durch eine auf das bewegliche Funktionsteil einwirkenden Last bewirkten und entgegen der Antriebsdrehrichtung für das bewegliche Funktionsteil gerichteten Drehrichtung der Schneckenverzahnung eine Hemmung der Schneckendrehung zur Aufnahme des von dem beweglichen Funktionsteil ausgeübten Drehmoments eingerichtet ist.

Der Erfindungsgedanke beruht demnach darauf, durch eine geeignete Auslegung der Schneckenverzahnung bzw. durch sonstige Maßnahmen im Anschluss an die Betätigung des beweglichen Funktionsteiles eine Rückbewegung des Funktionsteiles aufgrund einer auf das Funktionsteil einwirkenden Last dadurch zu verhindern, dass die Drehung der Schneckenverzahnung in der entsprechenden Drehrichtung so weit gehemmt ist, dass das von dem beweglichen Funktionsteil ausgehende Drehmoment abgefangen wird, ohne eine Rückbewegung des Funktionsteiles in seine Ausgangsstellung vor der Stellbewegung zuzulassen.

In einer ersten Ausführungsform der Erfindung ist vorgesehen, daß die Schneckenverzahnung als selbsthemmende Schnecke ausgelegt ist. Bei einer derartigen Auslegung der Schneckenverzahnung sind weitere Maßnahmen zur Abstützung des beweglichen Funktionsteiles nicht erforderlich.

Soweit die selbsthemmende Schnecke allerdings jeweils in ihren beiden Drehrichtungen einen eingeschränkten Wirkungsgrad aufweist, ist nach einem Ausführungsbeispiel der Erfindung die Schneckenverzahnung derart ausgelegt, dass in der einen Drehrichtung der Schneckenverzahnung, nämlich in der Stellrichtung für das Funktionsteil der Getriebewirkungsgrad voll nutzbar ist, während in der Gegendrehrichtung die Hemmung der Schneckendrehung dadurch herbeigeführt wird, dass sich die Schneckenverzahnung gegen ein ortsfestes Widerlager derart abstützt, dass bei einer gegen das Widerlager gerichteten axialen Belastung der Schneckenverzahnung durch das bewegliche Funktionsteil die Hemmung der Schneckendrehung durch die Abstützkraft herbeigeführt ist. Soweit nämlich im Anschluss an die Ausführung der Bewegung des Funktionsteiles von dem Funktionsteil her ein Drehmoment auf die Schneckenverzahnung einwirkt, führt dies zu einer axialen Belastung der Schneckenverzahnung, die in eine entsprechend wirkende Abstützkraft umsetzbar ist.

Die Hemmung der Schneckendrehung lässt sich dabei nach einem Ausführungsbeispiel der Erfindung dadurch herbeiführen, dass zwischen dem Widerlager und dem ersten Gang der Schneckenverzahnung ein reibungserhöhendes Bauteil angeordnet ist. Das reibungserhöhende Bauteil kann nach einem Ausführungsbeispiel der Erfindung als eine Zwischenscheibe aus einem Material mit einem nichtlinearen Reibungskoeffizienten ausgebildet sein; so stehen insbesondere Elastomer zur Verfügung, bei denen mit einer zunehmenden Krafteinwirkung eine exponentiell ansteigende Reibkraft auftritt.

Alternativ kann vorgesehen sein, dass eine sich mit zunehmender Last axial elastisch verformende Lagerscheibe angeordnet ist, so dass der erste Gang der Schneckenverzahnung unter Einwirkung der Abstützkraft auf einen größeren Durchmesser im Lager läuft als ohne Einwirken der Stützkraft.

In einer weiteren Ausführungsform der Erfindung ist vorgesehen, dass die der Schneckenverzahnung zugewandte Fläche des Getriebegehäuses mit einer kegelförmigen Einziehung versehen ist und auf der Trägerwelle ein formentsprechend ausgestalteter kegelförmiger Reibungskörper aus einem elastischen Material angeordnet ist; hierbei wird die Erhöhung der Reibkraft durch die kegelige Form von Einziehung und Reibungskörper sowie die elastische Verformung bewirkt.

In einer weiteren Alternative kann vorgesehen sein, dass zwischen Getriebegehäuse und Schneckenverzahnung eine Druckfeder angeordnet ist und Trägerwelle und Getriebegehäuse bei axialer Verschiebung der Trägerwelle ineinandergreifende Rastgestaltungen aufweisen; anstelle der Druckfeder kann auch am entsprechenden Ende der Trägerwelle eine Zugfeder angeordnet sein.

Nach einem Ausführungsbeispiel der Erfindung ist vorgesehen, dass je nach den bestehenden Platzverhältnissen die Schneckenverzahnung mittels eines Winkelgetriebes an eine Motorwelle des Elektromotors gekoppelt ist.

Soweit nach einem Ausführungsbeispiel der Erfindung als Winkelgetriebe ein Kronenradgetriebe vorgesehen ist, ergeben sich daraus fertigungstechnische Vorteile. Alternativ ist jedoch auch die Anordnung eines Kegelradgetriebes denkbar, wobei die Toleranzlagen eines Kegelradgetriebes bei einer Großserienfertigung nur mit hohem Aufwand beherrschbar wären. Insofern ist aber die Anwendung eines Kegelradgetriebes zur Verwirklichung der Erfindung nicht ausgeschlossen.

Nach einem Ausführungsbeispiel der Erfindung ist vorgesehen, dass die Schneckenverzahnung an einer Trägerwelle ausgebildet und die Trägerwelle an das Winkelgetriebe angeschlossen ist.

Nach einem Ausführungsbeispiel der Erfindung ist zur Erzeugung der Hemmung der Schneckendrehung vorgesehen, dass sich die Trägerwelle stirnseitig gegen einen Schaft der Motorwelle des Elektromotors abstützt, so dass dadurch ein entsprechendes Bremsmoment erzeugt wird.

Alternativ kann vorgesehen sein, dass die Kronenradverzahnung des zwischen Motorwelle des Elektromotors und der Trägerwelle für die Schneckenverzahnung wirksamen Kronenradgetriebes mehrstufig ausgebildet ist derart, dass sich bei axialer Belastung der Trägerwelle die Übersetzung des Kronenradgetriebes ändert und so ein Bremsmoment für die Drehung der Trägerwelle mit Schneckenverzahnung erzeugt wird.

Hinsichtlich der Anordnung der Schneckenverzahnung ist nach einem Ausführungsbeispiel der Erfindung vorgesehen, dass die die Schneckenverzahnung tragende Trägerwelle an ihrem dem Winkelgetriebe gegenüberliegenden Ende in einem Lager gehalten und in dem Bereich zwischen der Schneckenverzahnung und dem Winkelgetriebe in einem zusätzlichen, von einem Lagergehäuse umschlossenen Axiallager gelagert ist.

Zweckmäßig ist dabei die Ausbildung des Axiallagers als Kalottenlager, weil hierdurch eine Auslenkung der Trägerwelle aus der axialen Ausgangslage um einen geringen Winkel ermöglicht wird, womit ebenfalls eine Erhöhung der Getriebereibung im Sinne der Erfindung einstellbar ist.

Soweit die Lagerung der Trägerwelle in einem zusätzlichen Lagergehäuse verwirklicht ist, ist es nach einem Ausführungsbeispiel der Erfindung in zweckmäßiger Weise vorgesehen, dass das Lagergehäuse das Widerlager für die Schneckenverzahnung bildet.

Sofern die konstruktiven Maßnahmen zur Hemmung der Schneckendrehung noch nicht ausreichen sollten, kann zur weiteren Aufnahme des von der Gurtwelle ausgehenden Drehmoments vorgesehen sein, daß der Elektromotor mit einem weiteren Leistungsbereich zur Aufbringung eines der Unterstützung der Hemmung der Schneckenverzahnung dienenden Haltemoments ausgelegt ist, so dass zusätzlich zu der Hemmung der Schneckendrehung vom Elektromotor eine Blockierung der Rückdrehung der Schneckenverzahnung
über ein entsprechendes Haltemoment bewirkt wird.

In der Zeichnung sind Ausführungsbeispiele der Erfindung wiedergegeben, welche nachstehend beschrieben sind. Es zeigen:
- Fig. 1: einen Stellantrieb für eine elektrische Parkbremse in einer schematischen Darstellung,
- Fig. 2: die Hemmung der Schneckendrehung durch Abstützung der Schneckenverzahnung gegen das Lagergehäuse in einer Prinzipdarstellung in einer ersten Ausführungsform,
- Fig. 3: den Gegenstand der Fig. 2 in einer weiteren Ausführungsform,
- Fig. 4: den Gegenstand der Fig. 2 in einer weiteren Ausführungsform,
- Fig. 5: den Gegenstand der Fig. 2 in einer weiteren Ausführungsform,
- Fig. 6: den Gegenstand der Fig. 2 in einer weiteren Ausführungsform,
- Fig. 7: die Hemmung der Schneckendrehung durch Ausnutzung der Radialkräfte in den Lagerungen der Trägerwelle in einer Prinzipdarstellung,
- Fig. 8: die Hemmung der Schneckendrehung durch Abstützung der Trägerwelle gegen die Motorwelle des Elektromotors,
- Fig. 9: die Hemmung der Schneckendrehung durch Abstützung der Trägerwelle in dem Kronenradgetriebe.

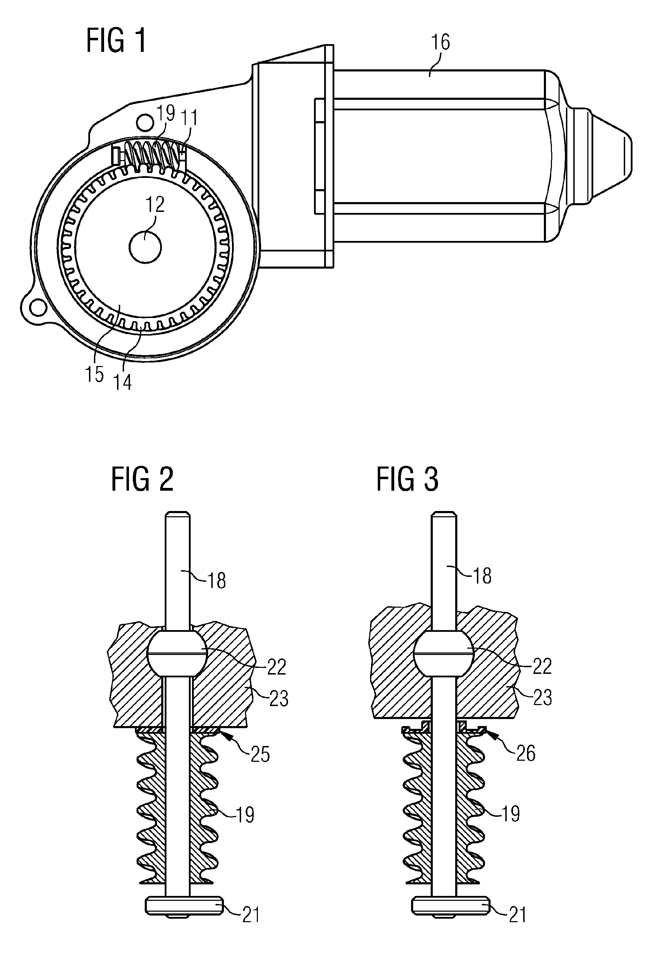

Der aus Fig. 1 ersichtliche Stellantrieb hat einen Elektromotor 16 als Antriebsmotor, der über ein erfindungsgemäß als Schneckenradgetriebe ausgebildetes Getriebe eine Abtriebswelle 12 für das nicht dargestellte bewegliche Funktionsteil antreibt. Hierzu ist auf der Motorwelle 11 eine Schneckenverzahnung 19 angeordnet, die mit der Außenverzahnung 14 des Antriebsritzels 15 kämmt. Das Antriebsritzel 15 ist mit der Abtriebswelle 12 für das bewegliche Funktionsteil gekoppelt.

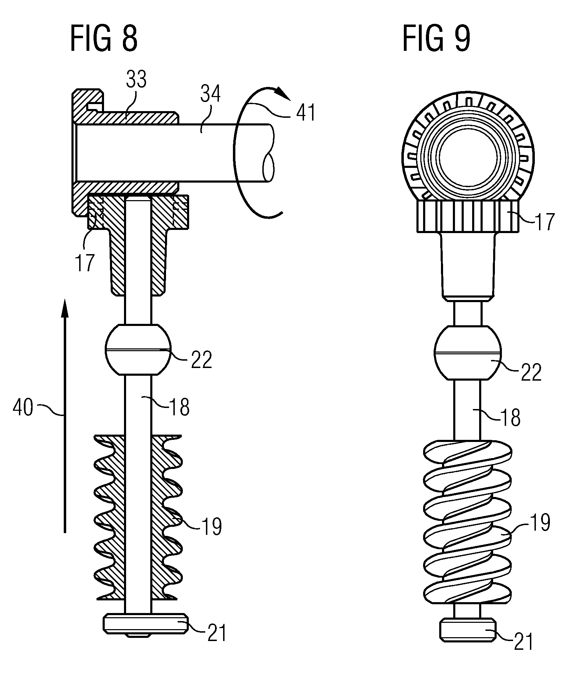

Wie sich im einzelnen aus Figuren 8 oder 9 entnehmen lässt, sind bei den nachfolgend beschriebenen Ausführungsbeispielen die Schneckenverzahnung 19 und die Motorwelle 11 voneinander getrennt angeordnet, wobei die Schneckenverzahnung 19 Teil einer gesonderten Trägerwelle 18 ist. Die Trägerwelle 18 mit der mit der Außenverzahnung 14 des Antriebsritzels 15 kämmenden Schneckenverzahnung 19 ist über ein Kronenradgetriebe 17 mit der Motorwelle 11 des Elektromotors 16 gekoppelt.

Die Trägerwelle 18 ist in einem Endlager 21 sowie in einem zwischen der Schneckenverzahnung 19 und dem Kronenradgetriebe 17 angeordneten Kalottenlager 22 gelagert, wobei das Kalottenlager 22 in einem Lagergehäuse 23 angeordnet ist.

Bei dem dargestellten Ausführungsbeispiel ist die Schneckenverzahnung 19 nicht als selbsthemmende Schnecke ausgebildet, so dass durch zusätzliche konstruktive Maßnahmen dafür Sorge getragen ist, dass bei einer im Anschluss an eine Verstellung des beweglichen Funktionsteils auf das bewegliche Funktionsteil einwirkenden Last entgegen der Stellrichtung (Pfeil 42) die von dem Antriebsritzel 15 auf die Schneckenverzahnung 19 und damit auf die Trägerwelle 18 ausgeübte Axialkraft (Pfeil 40) in eine reibungserhöhende Abstützkraft umgesetzt wird, so dass hierdurch eine Hemmung der Drehbewegung der Schneckenverzahnung 19 herbeigeführt ist.

Ausführungsbeispiele für die Bewirkung der Erhöhung der Reibkraft sind in den Fig. 2 bis 6 zunächst dargestellt, wobei bei dem in Fig. 2 dargestellten Ausführungsbeispiel zwischen dem ersten Gang der Schneckenverzahnung 19 und dem Lagergehäuse 23 des Kalottenlagers 22 eine Zwischenscheibe 25 aus einem Material mit einem nichtlinearen Reibungskoeffizienten angeordnet ist. Bei diesem Material kann es sich um ein geeignetes Elastomer handeln, bei dem mit einer Steigerung der einwirkenden Axialkraft die Reibkraft exponentiell ansteigt.

In ähnlicher Weise wirkt die gemäß Fig. 3 zwischen Schneckenverzahnung 19 und Lagergehäuse 23 angeordnete Lagerscheibe 26, bei der unter Einwirkung der Axialkraft (Pfeil 40) die Schneckenverzahnung auf einem größeren Durchmesser im Lager läuft als unter normaler Belastung.

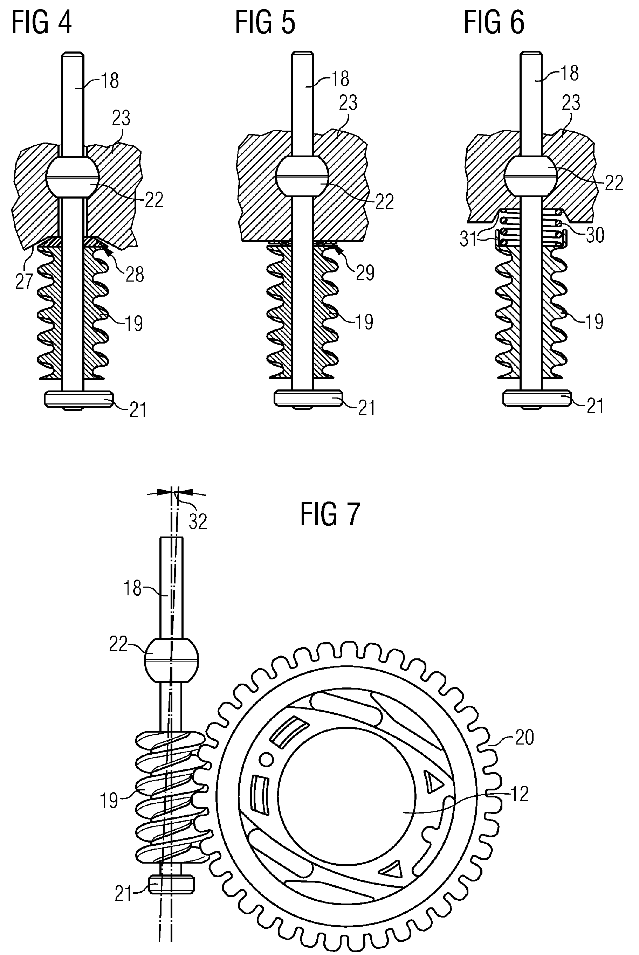

Bei dem in Fig. 4 dargestellten Ausführungsbeispiel weist das Lagergehäuse 23 eine kegelförmige Einziehung 27 auf, in die ein formentsprechender kegelförmiger Reibungskörper 28 aus einem elastischen Material eingreift, so dass durch die kegelige Form sowie die elastische Verformung des Reibungskörpers 28 die Reibkraft zwischen Schneckenverzahnung 19 und Lagergehäuse 23 erhöht wird.

In gleicher Weise ist bei dem in Fig. 5 dargestellten Ausführungsbeispiel zwischen Schneckenverzahnung 19 und Lagergehäuse 23 eine Blechscheibe 29 angeordnet, die sich unter Krafteinwirkung elastisch verformt, so dass sich die Reibfläche erhöht und der Reibwiderstand ansteigt. Hier wäre alternativ auch eine sogenannte "Knackfrosch"-Lösung zu verwirklichen.

Bei dem in Fig. 6 dargestellten Ausführungsbeispiel ist zwischen dem Lagergehäuse 23 und der Schneckenverzahnung 19 eine Druckfeder 30 angeordnet, wobei zusätzlich eine Formschlussgestaltung 31 zwischen Lagergehäuse 23 und dem
ersten Gang der Schneckenverzahnung 19 vorgesehen ist, so dass bei Krafteinwirkung (Pfeil 40) die Feder 30 zusammengedrückt wird, bis die Formschlussgestaltungen 31 ineinander verrasten.

In Fig. 7 ist die Möglichkeit dargestellt, die Reibkraft zwischen der Schneckenverzahnung 19 und der Außenverzahnung des Antriebsritzels 15 dadurch zu erhöhen, dass bei axialer Krafteinwirkung auf die Trägerwelle 18 sich diese in dem Kalottenlager 22 um einen geringen Winkel 32 verkippt.

In Fig. 8 ist die Möglichkeit dargestellt, dass sich die Trägerwelle 18 stirnseitig auf einem Schaft 33 der Motorwelle 11 des Elektromotors 16 abstützt und hierdurch ein entsprechendes Bremsmoment erzeugt wird.

In Fig. 9 ist angedeutet, dass die Kronenradverzahnungen des zwischen Motorwelle 11 des Elektromotors 16 und der Trägerwelle 18 wirksamen Kronenradgetriebes 17 mehrstufig ausgebildet ist derart, dass sich bei axialer Belastung der Trägerwelle (Pfeil 40) die Übersetzung des Kronenradgetriebes 17 von schnell auf langsam ändert, wobei alternativ oder zusätzlich eine Verschlechterung des Verzahnungswirkungsgrades in den Stufen des Kronenradgetriebes 17 eingerichtet sein kann.

## Patentansprüche

1. Stellantrieb für bewegliche Funktionsteile in Kraftfahrzeugen wie Fenster, Tür, Schiebedach, Sitzverstellung, elektrische Parkbremse oder dergleichen, mit einem Antriebsmotor und einem nachgeschalteten, an das bewegliche Funktionsteil gekoppelten Getriebe, wobei das Getriebe als mit der Außenverzahnung eines das bewegliche Funktionsteil antreibenden Antriebsritzels kämmende Schneckenverzahnung ausgebildet ist, **dadurch gekennzeichnet, dass** in der durch eine auf das bewegliche Funktionsteil einwirkenden Last bewirkten und entgegen der Antriebsdrehrichtung gerichteten Drehrichtung (Pfeil 40) der Schneckenverzahnung (19) eine Hemmung der Schneckendrehung zur Aufnahme des von dem beweglichen Funktionsteil ausgeübten Drehmoments eingerichtet ist.

2. Sicherheitsgurtaufroller nach Anspruch 1, **dadurch gekennzeichnet, dass** die Schneckenverzahnung (19) als selbsthemmende Schnecke ausgelegt ist.

3. Sicherheitsgurtaufroller nach Anspruch 1, **dadurch gekennzeichnet, dass** sich die Schneckenverzahnung (19) gegen ein ortsfestes Widerlager (23) derart abstützt, dass bei einer gegen das Widerlager (23) gerichteten axialen Belastung der Schneckenverzahnung (19) durch die Gurtwelle (12) die Hemmung der Schneckendrehung durch die Abstützkraft herbeigeführt ist.

4. Sicherheitsgurtaufroller nach Anspruch 3, **dadurch gekennzeichnet, dass** zwischen dem Widerlager (23) und dem ersten Gang der Schneckenverzahnung (19) ein reibungserhöhendes Bauteil (25, 26, 28, 30) angeordnet ist.

5. Sicherheitsgurtaufroller nach Anspruch 4, **dadurch gekennzeichnet, dass** eine Zwischenscheibe (25) aus einem Material mit einem nichtlinearen Reibungskoeffizienten vorgesehen ist.

6. Sicherheitsgurtaufroller nach Anspruch 4, **dadurch gekennzeichnet, dass** eine sich mit zunehmender Last axial elastisch verformende Lagerscheibe (26) angeordnet ist.

7. Sicherheitsgurtaufroller nach Anspruch 4, **dadurch gekennzeichnet, dass** die der Schneckenverzahnung (19) zugewandte Fläche des Widerlagers (23) mit einer kegelförmigen Einziehung versehen ist und auf der Trägerwelle (18) ein formentsprechend ausgestalteter kegelförmiger Reibungskörper (28) aus einem elastischen Material angeordnet ist.

8. Sicherheitsgurtaufroller nach Anspruch 4, **dadurch gekennzeichnet, dass** zwischen Widerlager (23) und Schneckenverzahnung (19) eine Druckfeder (30) angeordnet ist und Trägerwelle (18) und Widerlager (23) bei axialer Verschiebung der Trägerwelle (18) ineinandergreifende Rastgestaltungen (31) aufweisen.

9. Sicherheitsgurtaufroller nach einem der Ansprüche 1 bis 8, Anspruch 1, **dadurch gekennzeichnet, dass** die Schneckenverzahnung (19) mittels eines Winkelgetriebes (17) an eine Motorwelle (11) des Elektromotors (16) gekoppelt ist.

10. Sicherheitsgurtaufroller nach Anspruch 9, **dadurch gekennzeichnet, dass** das Winkelgetriebe als Kronenradgetriebe (17) ausgebildet ist.

11. Sicherheitsgurtaufroller nach Anspruch 9 oder 10, **dadurch gekennzeichnet, dass** die Schneckenverzahnung (19) an einer Trägerwelle (18) ausgebildet und die Trägerwelle (18) an das Winkelgetriebe (17) angeschlossen ist.

12. Sicherheitsgurtaufroller nach Anspruch 11, **dadurch gekennzeichnet, dass** sich die Trägerwelle (18) stirnseitig gegen einen Schaft (33) der Motorwelle (11) des Elektromotors (16) abstützt.

13. Sicherheitsgurtaufroller nach einem der Ansprüche 9 bis 12, **dadurch gekennzeich-net, dass** die Kronenradverzahnung des zwischen Motorwelle (11) des Elektromotors (16) und Trägerwelle (18) wirksamen Kronenradgetriebes (17) mehrstufig ausgebildet ist derart, dass sich bei axialer Belastung der Trägerwelle (18) die Übersetzung des Kronenradgetriebes (17) ändert.

14. Sicherheitsgurtaufroller nach einem der Ansprüche 11 bis 13 sowie 2 bis 8, **dadurch gekennzeichnet, dass** die die Schneckenverzahnung (19) tragende Trägerwelle (18) an ihrem dem Winkelgetriebe gegenüberliegenden Ende in einem Lager (21) gehalten und in dem Bereich zwischen der Schneckenverzahnung (19) und dem Winkelgetriebe (17) in einem zusätzlichen, von einem Lagergehäuse (23) umschlossenen Axiallager (22) gelagert ist.

15. Sicherheitsgurtaufroller nach Anspruch 14, **dadurch gekennzeichnet, dass** das Axiallager als Kalottenlager (22) ausgebildet ist.

16. Sicherheitsgurtaufroller nach Anspruch 14 oder 15, **dadurch gekennzeichnet, dass** das Lagergehäuse (23) das Widerlager für die Schneckenverzahnung (19) bildet.

17. Sicherheitsgurtaufroller nach einem der Ansprüche 3 bis 16, **dadurch gekennzeich-net, dass** der Elektromotor (16) mit einem weiteren Leistungsbereich zur Aufbringung eines der Unterstützung der Hemmung der Schneckenverzahnung (19) dienenden Haltemoments ausgelegt ist.
